# EUROPÄISCHE PATENTANMELDUNG

(11) **EP 4 293 257 A1**
(43) Veröffentlichungstag der Anmeldung: **20.12.2023**
(21) Anmeldenummer: 22179685.7
(22) Anmeldetag: 17.06.2022
(51) Int. Cl.: F16K 27/00, B05B 1/16, E03C 1/04, F16K 31/56

(54) **BETÄTIGUNGSVORRICHTUNG ZUR VERWENDUNG IN SANITÄRINSTALLATIONEN**

(71) Anmelder: Neoperl GmbH, 79379 Müllheim (DE)
(72) Erfinder: Strmsek, Adrijan, 2000 Maribor (SI)
(74) Vertreter: Mertzlufft-Paufler, Cornelius

(57) **Zusammenfassung**

Zusammenfassend wird zur Verbesserung der Bedienungseigenschaften einer Betätigungsvorrichtung zum Freischalten von Wasserwegen einer Sanitärinstallation vorgeschlagen, dass die Betätigungsvorrichtung eine Arretiermechanik (22) auf Basis wenigstens eines beweglichen Arretierelements (23) aufweist, mit der wenigstens zwei Betätigungselemente (8) der Vorrichtung, die dem Betätigen zugeordneter Ventile (3) dienen, in einer jeweiligen Betätigungsposition lösbar arretierbar sind, und dass die Betätigungsvorrichtung ein separates Freigabe-Betätigungselement (4) aufweist, mit dem eine Arretierung jedes der übrigen mindestens zwei Betätigungselemente (8) gelöst werden kann.

## Beschreibung

Die Erfindung betrifft eine Betätigungsvorrichtung zum Betätigen von einzelnen Ventilen einer Ventilanordnung. Hierzu weist die Betätigungsvorrichtung wenigstens zwei Betätigungselemente auf. Die Betätigungselemente sind manuell bedienbar und erlauben somit eine Aktuierung / Ansteuerung eines jeweiligen der Ventile, um die Ventile so durch Betätigung der Betätigungselemente zu öffnen oder zu schließen.

Die Erfindung betrifft ferner eine Verwendung einer solchen Betätigungsvorrichtung sowie eine Sanitärinstallation, die eine solche Betätigungsvorrichtung aufweist.

Derartige Betätigungsvorrichtungen sind an sich im Stand der Technik vorbekannt und werden insbesondere benutzt, um verschiedene Wasserwege mittels der Ventile zu- bzw. abzuschalten. Eine solche Aufgabenstellung stellt sich etwa in Baderäumen, wo mittels einer wie eingangs erläuterten Betätigungsvorrichtung verschiedene Ausläufe einer Sanitärarmatur mit Wasser versorgt werden sollen.

Ausgehend hiervon liegt der Erfindung die Aufgabe zugrunde, eine verbesserte Handhabung beziehungsweise Betätigung von Ventilen einer Ventilanordnung zu ermöglichen, die zum einen benutzerfreundlich ist und zum anderen die gesetzlichen beziehungsweise normativen Vorgaben einhält.

Zur Lösung dieser Aufgabe sind erfindungsgemäß bei einer Betätigungsvorrichtung die Merkmale von Anspruch 1 vorgesehen. Insbesondere wird somit erfindungsgemäß zur Lösung der Aufgabe bei einer Betätigungsvorrichtung der eingangs genannten Art vorgeschlagen, dass jedem der wenigstens zwei Betätigungselemente ein Arretierelement zugeordnet ist, mit dem sich das jeweilige Betätigungselement arretieren lässt und dass das Arretierelement mittels eines separaten Freigabe-Betätigungselements von einer Arretierstellung in eine Freigabestellung überführbar ist.

Die Betätigungsvorrichtung kann bevorzugt als eine manuelle Vorrichtung ausgestaltet sein, die manuell betätigbar ist. Das Arretierelement kann hingegen mehrteilig ausgebildet sein, somit können insbesondere mehrere separate Arretierelemente ausgebildet sein, wie noch genauer erläutert wird.

Die Betätigungsvorrichtung kann hierbei die Ventilanordnung mit den Ventilen mit umfassen und insbesondere zusammen mit der Ventilanordnung als eine bauliche Einheit ausgebildet sein. Die Ventile können auch als eine Baueinheit aus einem Pilotventil und einem zugeordneten Hauptventil ausgebildet sein. In diesem Fall kann das jeweilige Betätigungselement das Pilotventil schalten, wodurch indirekt (z.B. aufgrund von internem Druckanstieg im Hauptventil) auch das Hauptventil geschalten werden kann.

Die Betätigungselemente können dabei jeweils in einem zentralen Führungselement oder in jeweiligen Führungselementen geführt sein, etwa um nur eine lineare Betätigung zu erlauben.

Sowohl die Betätigungselemente als auch das Arretierelement können zudem über zugehörige Rückstellelemente verfügen, die das jeweilige Element mit Hilfe einer Rückstellkraft zurückstellen (in die Ausgangsposition im Falle eines Betätigungselements oder in die Freigabestellung im Falle des Arretierelements). Solche Rückstellelemente können auch einstückig mit dem jeweiligen Element ausgebildet sein.

Das Freigabe-Betätigungselement fungiert hier somit als Löseelement und löst bei Aktuierung gerade die Arretierung auf, die das Arretierelement in der Arretierstellung erzeugt.

Vorteilhaft an einer solchen Ausgestaltung ist, dass durch die Betätigungsvorrichtung ein bequemes sofortiges Stoppen des Wasserflusses durch Betätigen des Freigabe-Betätigungselements erreicht werden kann und zwar unabhängig davon, welches der Betätigungselemente gerade in einer Betätigungsposition arretiert ist, in welcher das zugehörige Ventil wasserleitend geschalten ist. Das Freigabe-Betätigungselement kann somit als eine globale Stopp-Taste für den Wasserfluss durch die Ventilanordnung fungieren/verstanden werden.

Erfindungsgemäß ist weiter vorgesehen, dass jedes Betätigungselement zwischen seinem freien Ende und seiner mit dem Arretierelement zusammenwirkenden Ausnehmung einen Haltevorsprung aufweist, mit welchem das Arretierelement auslenkbar ist.

Somit kann sich an den das Arretierelement auslenkenden Abschnitt des Betätigungselements die Ausnehmung anschließen, mit welcher das Betätigungselement an dem Arretierelement einrastet.

Weiter ist erfindungsgemäß vorgesehen, dass jedes Betätigungselement im Bereich seines Haltevorsprungs axial geführt ist.

Somit kann ein seitliches Verkippen des Betätigungselements vermieden werden. Ein Verkippen des Betätigungselements während seiner Betätigung könnte dazu führen, dass dieses nicht korrekt arretiert wird.

Erfindungsgemäß kann die Aufgabe auch durch weitere vorteilhafte Ausführungen gemäß den Unteransprüchen gelöst werden.

Die Ausnehmung kann so beispielsweise eine umlaufende Nut sein.

Fehler bei der Arretierung des Betätigungselements durch ein um seine Längsachse verdrehtes Betätigungselement können somit vermieden werden.

Es kann auch vorgesehen sein, dass die Ausnehmung den Haltevorsprung definiert.

So schließt sich die Ausnehmung direkt an den Haltevorsprung an und das Betätigungselement kann besonders kompakt ausgebildet werden.

Beispielsweise kann das Arretierelement ein globales Arretierelement sein, welches alle der wenigstens zwei Betätigungselemente arretieren kann.

Gemäß einer alternativen Ausgestaltung kann auch jedem der wenigstens zwei Betätigungselemente ein jeweiliges separates Arretierelement zugeordnet sein. In diesem Fall gibt es somit mehrere Arretierelemente, die jeweils nur eines oder zwei der wenigstens zwei Betätigungselemente arretieren können. Bei solchen Ausgestaltungen ist es bevorzugt, wenn alle Arretierelemente mittels des Freigabe-Betätigungselements in eine jeweilige Freigabestellung überführbar sind, um so die globale Stopp-Funktionalität zu gewährleisten.

Zum Überführen eines Arretierelements in die Freigabestellung kann das Freigabe-Betätigungselement beispielsweise direkt auf ein globales Arretierelement oder auf mehrere Arretierelemente einwirken. Dies kann insbesondere vermittelt über eine Auflaufschräge geschehen, die beispielsweise am Arretierelement und/oder am Freigabe-Betätigungselement ausgebildet sein kann.

Jedes der zuvor erwähnten separaten Arretierelemente kann auch mittels eines globalen Freigabeelements in eine jeweilige Freigabestellung überführbar sein. Bei einer solchen Ausgestaltung werden die Arretierelemente somit gemeinsam von dem Freigabeelement in die jeweilige Freigabestellung überführt. Vorzugsweise kann dabei das Freigabeelement seinerseits mittels des Freigabe-Betätigungselements, insbesondere vermittelt über eine Auflaufschräge, aktuierbar sein.

Gemäß einer Ausgestaltung können die separaten Arretierelemente radial in Bezug auf das Freigabe-Betätigungselement angeordnet sein und/oder in radialen Richtungen in jeweilige Freigabestellungen verschiebbar sein. Hierbei kann das Freigabe-Betätigungselement bevorzugt im Zentrum der Vorrichtung angeordnet sein, sodass sich die Arretierelemente dann radial in Bezug auf das Freigabe-Betätigungselement bewegen.

Alternativ sind auch Ausgestaltungen denkbar, bei denen die separaten Arretierelemente entlang einer gemeinsamen Arretierrichtung verschieblich gelagert sind. Dies bietet sich beispielsweise bei einer linearen Anordnung der Arretierelemente und/oder der Betätigungselemente an.

Schließlich kann die Erfindung auch in Ausgestaltungen realisiert sein, in denen die separaten Arretierelemente in die jeweilige Arretierstellung um jeweilige Rotationsachsen verschwenkbar sind. In diesem Fall sind die Arretierelemente also nicht als Verschiebeteile, sondern als Schwenkteile ausgestaltet.

Die Betätigungselemente können jeweils von einer Ausgangsposition (die auch als OFF-Position bezeichnet werden könnte) in eine Betätigungsposition (die auch als ON-Position bezeichnet werden könnte) überführbar sein. In der Betätigungsposition können die Betätigungselemente dabei so auf Stellelemente des zugeordneten Ventils einwirken, dass das Ventil geschalten wird, also beispielsweise geöffnet wird (zum Beispiel bei einem selbstschließenden Ventil). Selbstverständlich sind auch Ausgestaltungen mit selbstöffnenden Ventilen denkbar. In diesem Fall können die selbstöffnenden Ventile mittels der Betätigungselemente geschlossen werden (Somit wäre dann das Ventil geschlossen, wenn sich das zugeordnete Betätigungselement in der ON-Position / der Betätigungsposition befindet).

Nach der Überführung in die jeweilige Betätigungsposition kann dabei jedes der wenigstens zwei Betätigungselemente automatisch mit dem zugehörigen Arretierelement in der Betätigungsposition fixierbar beziehungsweise fixiert sein. Das heißt das jeweilige Arretierelement sorgt bei einer solchen Ausgestaltung dafür, dass das Betätigungselement und das zugeordnete Ventil eingeschalten bleibt, also in der Betätigungsposition verharrt, sobald diese erreicht ist. Mit anderen Worten wird dadurch eine selbsttätige Rückkehr des fixierten Betätigungselements in die Ausgangsposition gerade verhindert. Wenn das Betätigungselement in der Betätigungsposition verharrt, kann beispielsweise ein kontinuierlicher Fluss durch das zugeordnete und dann geöffnete Ventil gewährleistet bleiben (bei Verwendung eines selbstschließenden Ventils).

Ein jeweiliges Arretierelement der Vorrichtung kann somit - vorzugsweise gegen eine Rückstellkraft eines Rückstellelements - von einer jeweiligen Arretierstellung in eine Freigabestellung bewegbar sein, wobei das jeweilige Arretierelement das zugehörige Betätigungselement in der Arretierstellung fixiert (also ortstabil hält). Das zugeordnete Rückstellelement kann hingegen das jeweilige Arretierelement von der Freigabestellung in die Arretierstellung befördern, um so ein automatisches Arretieren zu ermöglichen. Die besagte Ausgangsposition kann somit als eine OFF-Position verstanden werden, die Betätigungsposition hingegen als eine ON-Position: So kann das zugehörige Ventil in der Betätigungsposition gerade betätigt sein. Bei einem selbstschließenden Ventil wäre somit die Betätigungsposition diejenige, in der das Ventil gerade geöffnet ist.

Gemäß einer weiteren möglichen Ausgestaltung kann die Vorrichtung auch mit einer Sperr-Funktion ausgestattet werden: So kann jedem der wenigstens zwei Betätigungselemente ein jeweiliges Sperrelement (welches separat vom zugehörigen Arretierelement ausgebildet sein kann) zugeordnet sein, mit dem sich eine Betätigungsbewegung des jeweiligen Betätigungselements zeitweise sperren lässt. Dies bedeutet, dass das Betätigungselement im gesperrten Zustand überhaupt nicht mehr, oder aber zumindest nicht mehr in vollem Umfang betätigbar sein kann. Dadurch kann erreicht werden, dass sich ein zugeordnetes Ventil mittels eines gesperrten Betätigungselements gerade nicht mehr schalten lässt (somit ist auch das Ventil gesperrt). Die Sperrelemente können dabei jeweils verschieblich oder aber verschwenkbar gelagert sein.

Diese Sperr-Funktionalität kann insbesondere derart ausgestaltet sein, dass - sobald sich eines der wenigstens zwei Betätigungselemente in einer/der erwähnten Betätigungsposition befindet, die Betätigung aller anderen der wenigstens zwei Betätigungselemente gerade gesperrt ist. In einem solchen Fall kann zusätzlich vorgesehen sein, dass durch Betätigen eines der wenigstens zwei Betätigungselemente das jeweilige Sperrelement von einer Sperrstellung in eine Freigabestellung überführbar ist.

Ferner kann die Vorrichtung so ausgestaltet sein, dass durch Betätigen des separaten Freigabe-Betätigungselements das jeweilige Sperrelement von einer Freigabestellung in eine Sperrstellung überführbar ist. Somit kann das Freigabe-Betätigungselement neben der Freigabe-Funktion, also dem Freigeben der Arretierung des gerade aktuierten Betätigungselements, auch eine Sperr-Funktion ausüben, nämlich durch (zeitweises / aufhebbares) Sperren einzelner, insbesondere aller, Betätigungselemente. Wird also eine Arretierung eines Betätigungselement durch Betätigen des Freigabe-Betätigungselements aufgehoben, so kann dadurch zunächst eine vorübergehende Sperrung aller Betätigungselemente erreicht sein. Diese (globale) Sperrung kann dann dadurch aufgehoben werden, dass eines der Betätigungselemente aktuiert wird, wodurch das zugeordnete Sperrelement von der Sperrstellung in die Freigabestellung überführt wird. Dies kann einhergehen mit einer Überführung von anderen Sperrelementen von einer Freigabestellung in die Sperrstellung, sodass also die Aktuierung eines der Betätigungselemente zu einer Sperrung der übrigen Betätigungselemente führt.

Durch die Verwendung von Sperrelementen kann somit insbesondere erreicht werden, dass sich immer nur maximal eines der wenigstens zwei Betätigungselemente in der Betätigungsposition befinden kann. Dies ist beispielsweise sinnvoll, wenn der Wasserdurchfluss durch die Ventilanordnung begrenzt werden soll, in dem immer nur eines der wenigsten zwei Ventile mit Hilfe der Betätigungsvorrichtung geöffnet werden soll/kann.

Es kann ferner vorgesehen sein, dass jedes der Sperrelemente mit Hilfe des Freigabe-Betätigungselements in eine jeweilige Sperrstellung überführbar ist. Hierbei können sich insbesondere die die Sperrelemente gegenseitig berühren und somit aktuieren.

Ergänzend oder aber alternativ kann auch vorgesehen sein, dass durch Betätigen eines der wenigstens zwei Betätigungselemente ein zugehöriges Sperrelement von einer Sperrstellung in eine Freigabestellung überführbar ist, wenn gerade keines der Betätigungselemente mit Hilfe des zugehörigen Arretierelements arretiert ist. Bei einer solchen Ausgestaltung können demnach einzelne der Betätigungselement (je nach aktueller Betätigungssituation) als ein Entsperrelement fungieren, mit dem sich ein jeweiliges Sperrelement in eine freigebende Stellung überführen lässt.

In wiederum anderen Ausgestaltungen ganz ohne Sperr-Funktionalität kann hingegen vorgesehen sein, dass die mindestens zwei Betätigungselemente sich gegenseitig gerade nicht sperren, sodass sich auch mehrere der mindestens zwei Betätigungselemente gleichzeitig in einer/der Betätigungsposition befinden können. Dadurch kann ermöglicht werden, dass Wasser durch mehrere der Ventile gleichzeitig strömen kann.

Ganz allgemein kann das jeweilige Arretierelement zum formschlüssigen Arretieren eines zugeordneten Betätigungselements eingerichtet sein. Etwa kann das Arretierelement Vorsprünge, zum Beispiel auch in Form eines Lochrands, aufweisen, die in zugeordnete Ausnehmungen der Betätigungselemente eingreifen können, um den gewünschten Formschluss zu erzeugen.

Insbesondere kann hierzu ein Haltevorsprung am jeweiligen Betätigungselement ausgebildet sein, in welchen das (zugeordnete) Arretierelement eingreifen kann.

In den allermeisten Fällen, wird die Bedienbarkeit verbessert, wenn die wenigstens zwei Betätigungselemente entlang einer gemeinsamen Betätigungsrichtung manuell betätigbar sind. Beispielsweise können die Betätigungselemente als Drücktaster ausgestaltet sein, die nur entlang einer bestimmten Richtung axial betätigbar sind.

Das Arretierelement, also insbesondere die zuvor erwähnten separaten Arretierelemente, können nun so gelagert sein, dass sie sich beim Übergang in eine/die Arretierstellung in einer Ebene bewegt/bewegen, die quer zur Betätigungsrichtung der Betätigungselemente verläuft. Hierdurch wird ein seitliches Eingreifen des jeweiligen Arretierelements in das zugeordnete Betätigungselement ermöglicht, wodurch eine robuste Arretierung erreichbar ist.

Es kann ferner vorgesehen sein, dass das Arretierelement, insbesondere die separaten Arretierelemente, in eine/die jeweilige Arretierstellung linear bewegbar oder verschwenkbar sind. Hierbei kann eine zugeordnete Schwenkachse gerade in der Betätigungsrichtung der Betätigungselemente ausgerichtet sein, sodass sich das jeweilige Arretierelement in einer Schwenkebene bewegen kann, die quer zur Betätigungsrichtung ausgerichtet ist.

Gemäß einer weiteren Möglichkeit, kann die Vorrichtung auch so ausgestaltet werden, dass die Arretierung nicht nur mit dem separaten Freigabe-Betätigungselement lösbar ist, sondern dass zudem eine durch das Arretierelement hervorgerufene Arretierung eines der Betätigungselemente durch Betätigung eines anderen nicht-arretierten der Betätigungselemente aufhebbar ist. Ist demnach eines der Betätigungselemente in einer ON-Position arretiert, so kann diese Arretierung durch Betätigen eines benachbarten nicht-arretierten Betätigungselements (aus der OFF-Position heraus) aufgehoben werden.

Hierzu kann das aktuierte nicht-arretierte Betätigungselement insbesondere über eine Auflaufschräge verfügen, mit welcher das Arretierelement in eine/die Freigabestellung überführbar ist.

Schließlich wird zur Lösung der eingangs erwähnten Aufgabe auch eine Sanitärinstallation vorgeschlagen, die insbesondere als eine Dusch- und/oder Wannenarmatur ausgestaltet sein kann, und die eine Betätigungsvorrichtung nach einem der auf eine Betätigungsvorrichtung gerichteten Ansprüche oder wie zuvor beschrieben aufweist.

Somit wird auch vorgeschlagen, eine wie hierin beschriebene Betätigungsvorrichtung gerade an einer solchen Sanitärinstallation zu verwenden, um so den Wasserfluss zu einzelnen Wasserausläufen der Sanitärinstallation steuern zu können.

Die Erfindung wird nun anhand von mehreren Ausführungsbeispielen näher beschrieben, ist aber nicht auf diese Ausführungsbeispiele beschränkt. Weitere Ausbildungen der Erfindung können aus der nachfolgenden Beschreibung eines bevorzugten Ausführungsbeispiels in Verbindung mit der allgemeinen Beschreibung, den Ansprüchen sowie den Zeichnungen gewonnen werden.

Bei der folgenden Beschreibung verschiedener bevorzugter Ausführungsformen der Erfindung erhalten in ihrer Funktion übereinstimmende Elemente auch bei abweichender Gestaltung oder Formgebung übereinstimmende Bezugszahlen.

Es zeigt:
- Fig. 1: die Bestandteile einer ersten erfindungsgemäßen Betätigungsvorrichtung samt zugehöriger Ventilanordnung,
- Fig. 2: die Vorrichtung aus Figur 1 in zusammengebautem Zustand,
- Fig. 3: eine seitliche Querschnittsansicht der Vorrichtung aus Figur 1 und 2,
- Fig. 4 bis 10: weitere seitliche Querschnittsansichten der Vorrichtung aus Figur 1 und 2 in unterschiedlichen Betätigungszuständen,
- Fig. 11: eine Sanitärinstallation nach dem Stand der Technik,
- Fig. 12: eine zweite erfindungsgemäße Betätigungsvorrichtung in einer dreidimensionalen Schrägansicht von oben,
- Fig. 13: die Betätigungsvorrichtung aus Fig. 12 mit abgenommener Abdeckung,
- Fig. 14: die Betätigungsvorrichtung aus Fig. 12 in einer teilweise aufgeschnittenen Schrägansicht,
- Fig. 15: eine Arretierelement der Betätigungsvorrichtung aus Fig. 12 in Arretierstellung,
- Fig. 16: eine Arretierelement der Betätigungsvorrichtung aus Fig. 12 in Freigabestellung,
- Fig. 17: eine Explosionsdarstellung der Betätigungsvorrichtung aus Fig. 12,
- Fig. 18: den Bewegungsablauf eines Betätigungselements aus der Ausgangsposition (oben) in die Betätigungsposition (unten) bei der Betätigungsvorrichtung aus Fig. 12,
- Fig. 19: den Bewegungsablauf eines Freigabe-Betätigungselements bei Lösen der Arretierungsmechanik und die korrespondierende Rückbewegung der arretierten Betätigungselemente aus der Betätigungsposition in die Ausgangsposition.
- Fig. 20: die Bestandteile einer dritten erfindungsgemäßen Betätigungsvorrichtung samt zugehöriger Ventilanordnung,
- Fig. 21: die Vorrichtung aus Figur 20 in zusammengebautem Zustand,
- Fig. 22: eine schräge teilweise Querschnittsansicht der Vorrichtung aus Figur 20 und 21,
- Fig. 23: in den Ansichten a) bis d) den Bewegungsablauf eines Betätigungselements aus der Ausgangsposition in eine arretierte Betätigungsposition bei der Betätigungsvorrichtung aus Fig. 12, sowie in den Ansichten e) bis h) den Bewegungsablauf eines Freigabe-Betätigungselements beim Lösen der Arretierungsmechanik und die korrespondierende Rückbewegung der arretierten Betätigungselemente aus der Betätigungsposition in die Ausgangsposition,
- Fig. 24: eine vierte erfindungsgemäße Betätigungsvorrichtung in einer dreidimensionalen Schrägansicht, und
- Fig. 25: eine Explosionsdarstellung der Betätigungsvorrichtung aus Fig. 24.

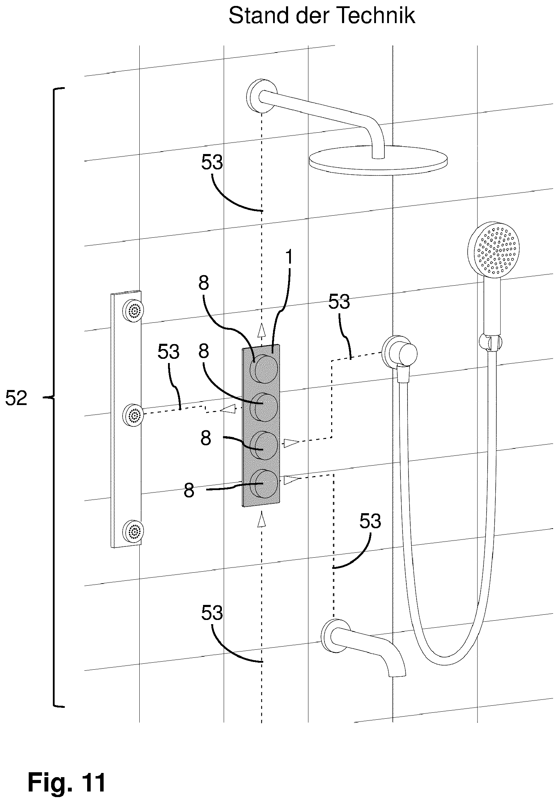

Die Figur 11 zeigt eine im Ganzen mit 52 bezeichnete Sanitärinstallation nach dem Stand der Technik. Die Sanitärinstallation 1 bildet Wasserwege 53 die hier beispielhaft zu einem Duschkopf, einer Handbrause, einem Wannenauslass und einer Massageeinheit geführt sind. Bei weiteren Ausführungsbeispielen können andere Anzahlen und/oder Arten von Wasserauslässen ausgebildet sein.

Die in Figur 11 erkennbare Betätigungsvorrichtung 1 weist mehrere Betätigungselemente 8 auf, die dazu dienen, die einzelnen Wasserwege 2 zu- und abzuschalten, um den Wasserausfluss wahlweise über einzelne oder mehrere Wasserauslässe zu leiten. Die Betätigungselemente 8 sind bei dem Beispiel der Figur 11 linear angeordnet, können aber beispielsweise auch ringförmig oder noch allgemeiner auf einer Kurvenlinie angeordnet sein.

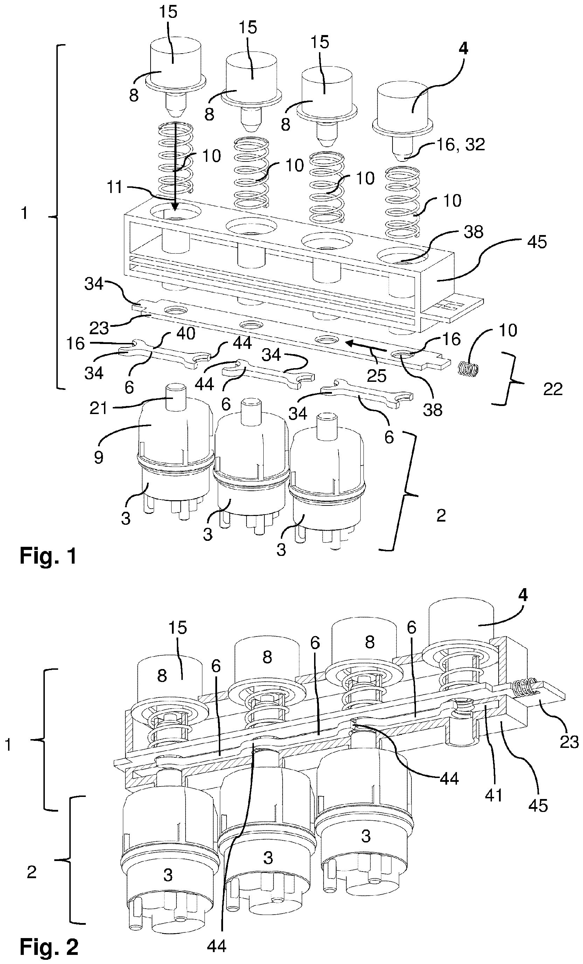

Die Figuren 1 bis 10 zeigen eine erste erfindungsgemäße Betätigungsvorrichtung 1 zur Verwendung bei einer Sanitärinstallation 1, ähnlich der der Figur 11, allerdings mit nur drei schaltbaren Wasserwegen 53. Eine erfindungsgemäße Betätigungsvorrichtung 1 kann somit zur Betätigung einer Ventilanordnung 2 mit mehreren Ventilen 3 genutzt werden, die unter ihr angeordnet und/oder mit ihr eine bauliche Einheit bildet (vgl. Figur 1 und 2).

Die Betätigungsvorrichtung 1 hat mehrere Betätigungselemente 8, die zwischen einer Ausgangsposition 29 (OFF-Position) und einer Betätigungsposition 30 (ON-Position) verstellbar sind. Die Ventilanordnung 2 hat entsprechend mehrere Ventile 2, die jeweils einen Wasserweg 2 schalten.

Die Ausgestaltung gemäß der Figur 1 zeigt eine lineare Anordnung von drei Ventilen 3, die jeweils als selbstschließende Tastventile 9 ausgebildet sind. Für jedes der drei Ventile 3 ist ein zugehöriges Betätigungselement 8 vorgesehen, mit welchem sich das jeweilige Ventil 3 öffnen lässt, sodass Wasser aus einem gemeinsamen Einlass, der alle Ventile 3 versorgt, durch das jeweils geöffnete Ventil 3 strömen können, um von dort zu einem zugeordneten Wasserauslass 2 zu gelangen (vgl. dazu beispielhaft Figur 11).

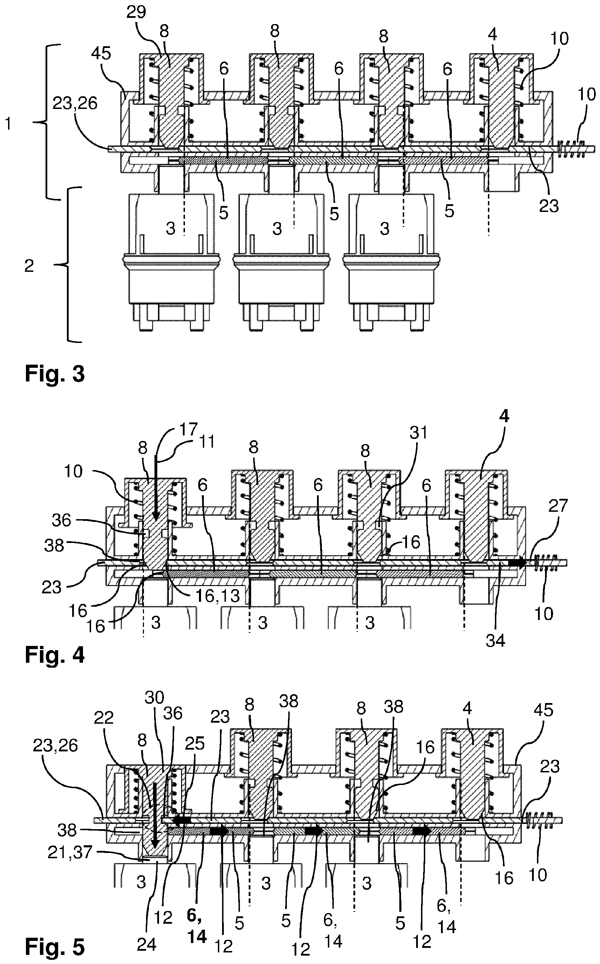

Die drei Betätigungselemente 8 (als auch das weitere Freigabe-Betätigungselement 4) sind jeweils als Drücktaster 15 ausgebildet und gegen die Rückstellkraft eines jeweiligen Rückstellelements 10 auslenkbar. Durch Drücken eines jeweiligen der Betätigungselemente 8 in der in Figur 4 illustrierten Betätigungsrichtung 11 kann eine Aktuierungskraft auf ein jeweiliges Stellelement 21 (vgl. Figur 1) des zugeordneten Ventils 3 übertragen beziehungsweise ausgeübt werden, sodass das betätigte Ventil 3 in eine Offen-Position 24 überführbar ist, in welcher Wasser durch das Ventil 3 strömen kann.

Jedem der drei Betätigungselemente 8 ist ein Arretierelement 23, nämlich das in Figur 1 gezeigte globale Arretierelement 23, zugeordnet. Dieses Arretierelement lässt sich, wie noch genauer erläutert wird, mittels eines separaten Freigabe-Betätigungselement 4 (ganz rechts in Figur 1) von einer Arretierstellung 26 (vgl. Figur 5) in eine Freigabestellung 27 (vgl. Figur 4) überführen. Das Freigabe-Betätigungselement 4 dient dabei als globale STOPP-Taste, mit der ein Wasserfluss durch eines der Ventile 3 jederzeit gestoppt werden kann, in dem die jeweilige Arretierung des betroffenen Betätigungselements 4 durch Betätigen des Freigabe-Betätigungselements 4 aufgehoben wird, sodass dann das Betätigungselement 4 selbsttätig in die Ausgangsposition 29 zurückkehren und sich das angesteuerte Ventil 3 entsprechend selbsttätig schließen kann.

Die Betätigungsvorrichtung 1 der Figur 1 weist ferner ein Sperrteil auf, welches bei dem Beispiel der Figur 1 aus drei separaten Sperrelementen 6 besteht, die jeweils als ein Verschiebeteil 34 ausgebildet sind und in jeweilige Sperrstellungen 5 verschiebbar sind (vgl. Figur 5).

Daneben umfasst die Betätigungsvorrichtung 1 noch ein globales Arretierelement 23, welches ebenfalls als Verschiebeteil 34 ausgestaltet ist. Sowohl das globale Arretierelement 23 als auch die drei Sperrelemente 6 sind in jeweiligen Führungen einer Führungsvorrichtung 45 der Betätigungsvorrichtung 1 geführt. Daher können diese Elemente auf jeweiligen Verschiebeflächen 41 in jeweiligen Ebenen linear verschoben werden, die gerade orthogonal zu der gemeinsamen Betätigungsrichtung 11 der Betätigungselemente 8 verlaufen.

Wie in Figur 1 zu erkennen ist, weisen die einzelnen Sperrelemente 6 korrespondierende Berührflächen 44 auf, über welche Aktuierungskräfte übertragbar sind, sodass jedes der drei Sperrelemente 6 ein jeweils benachbartes der Sperrelemente 6 anschieben kann. So schiebt etwa in Figur 5 das linke Sperrelement 6 das rechts benachbarte Sperrelement 6 an und dieses wiederum das Sperrelement 6 ganz rechts, sodass sich, angetrieben durch die Betätigungsbewegung 17 des linken Betätigungselements 8, in Figur 5 die drei Sperrelemente 6 gemeinsam nach rechts in der Sperrbewegungsrichtung 12 in ihre jeweiligen Sperrstellungen 5 bewegen. Diese Sperrbewegungsrichtung 12 verläuft gerade quer zur Betätigungsrichtung 11 der Betätigungselemente 8.

Die drei Sperrelemente 6 sind zudem gerade durch die Führungsvorrichtung 45 so linear geführt, dass Bewegungen der Sperrelemente 6 in der Betätigungsrichtung 11 gerade ausgeschlossen sind.

Wie die Ansicht der Figur 2 zeigt, bilden sowohl das Arretierelement 23 als auch die Sperrelemente 6 jeweilige Durchgriffsfenster 38 aus, durch welche hindurch die Betätigungselemente 8 aktuierbar sind und somit auf die Stellelemente 21 der jeweiligen Ventile 3 einwirken können. Ferner ist in Figur 2 zu erkennen, dass das Arretierelement 23 gegen die Rückstellkraft eines Rückstellelements 10 auslenkbar ist.

Die Betätigungsvorrichtung 1 ist gerade so ausgestaltet, dass jedes der drei Ventile 3 mittels des jeweils zugeordneten Betätigungselements 8 geöffnet werden kann. Mittels des jeweiligen Sperrelements 6 ist ferner jedes der drei Betätigungselemente 8 (und damit das zugehörige Ventil 3) blockierbar, wobei ein momentan blockiertes Betätigungselement 8 gerade nicht mehr durch Drücken aktuiert werden kann, wenn eines der Betätigungselemente 8 in einer Betätigungsposition 30 durch das zugeordnete Arretierelement 23 arretiert ist, wie das in Figur 5 für das linke Betätigungselement 8 illustriert ist.

Die Funktionsweise der Betätigungsvorrichtung 1 lässt sich anschaulich anhand der Figuren 3 bis 10 illustrieren: Figur 3 zeigt dabei die Ausgangssituation, in welcher alle vier Rückstellelemente 10 der Betätigungselemente 8 voll ausgelenkt sind, sodass sich die jeweiligen Betätigungselemente 8 in einer jeweiligen obersten Position (Off-Position / Ausgangsposition 29) befinden.

In Figur 4 wird nun das linke Betätigungselement 8 mittels einer Betätigungsbewegung 17 in der gezeigten Betätigungsrichtung 11 manuell aktuiert. Das linke Betätigungselement 8, welches identisch zu den weiteren Betätigungselementen 8 ausgestaltet ist, weist eine zylindrische Grundform auf, mit einer umlaufenden Schrägfläche 16 am unteren Ende, die ein Umlenkelement 13 beziehungsweise eine Auflaufschräge 32 ausbildet, um die beim Betätigen ausgeübte Betätigungskraft in die Ebene umzulenken, in welcher sich die Sperrelemente 6 bewegen. Ferner ist in Figur 4 zu erkennen, dass in einem mittleren Abschnitt des Betätigungselements 8 eine umlaufende Nut ausgebildet ist, die eine Ausnehmung 36 ausbildet und dadurch einen Haltevorsprung 31 definiert. Lediglich das äußerst rechte Betätigungselement 8, welches als Freigabe-Betätigungselement 4 dient, weist keinen solchen Haltevorsprung auf.

Wie die Figur 4 zeigt, stößt die Schrägfläche 16 des linken Betätigungselements 8 zunächst auf eine korrespondierende Schrägfläche 16, welche am oberen Rand eines Durchgriffsfensters 38 ausgebildet ist, welches seinerseits in dem Arretierelement 23 ausgebildet ist (vgl. Figur 1). Mittels des Umlenkelements 13 überträgt somit das Betätigungselement 8 die Betätigungskraft auf das Arretierelement 23 und verschiebt somit dieses nach rechts (vgl. den Blockpfeil in Figur 4), sodass das Arretierelement 23 entgegen der Rückstellkraft des zugeordneten Rückstellelements 10 nach rechts ausgelenkt wird.

Bei der weiteren Abwärtsbewegung des Betätigungselements 8, die nun durch die Seitwärtsbewegung des Arretierelements 23 ermöglicht (also freigegeben) ist, stößt das Umlenkelement 13 als nächstes auf eine weitere Schrägfläche 16, die am linken oberen Rand des linken Sperrelements 6 ausgebildet ist (vgl. Figur 1). Dadurch wird das erste linke Sperrelement 6 nach rechts (in Figur 5) verschoben, wodurch das in der Führungsvorrichtung 45 ausgebildete Durchgriffsfenster 38 (ganz links in Figur 5) freigegeben wird. Dadurch kann nun das linke Betätigungselement 8 die Betätigungskraft auf das Stellelement 21 des ersten linken Ventils 3 übertragen, um dieses Ventil 3 zu öffnen.

Mit anderen Worten wird hier also durch Betätigung des Ventils 3 mit Hilfe des Betätigungselements 8 in der Betätigungsrichtung 11 ein Sperrelement 6 der Betätigungsvorrichtung 1 in die in Figur 5 gezeigte Sperrstellung 5 bewegt. Denn die Verschiebung des ersten Sperrelements 6 bewirkt eine weitere Verschiebung der weiteren beiden Sperrelemente 6 in die in Figur 5 gezeigten jeweiligen Sperrstellungen 5. In der in Figur 5 gezeigten Situation blockiert das erste Sperrelement 6 das dem zweiten Betätigungselement 8 zugeordnete Durchgriffsfenster 38 und das zweite Sperrelement 6 das dem dritten (von links) Betätigungselement 8 zugeordnete Durchgriffsfenster 38. Hierdurch wird gerade erreicht, dass eine Betätigung der beiden verbleibenden Ventile 3 und 3 blockiert ist, sobald sich die Sperrelemente 6 in den in Figur 5 illustrierten Sperrstellungen 5 befinden.

In Figur 5 ist ferner zu erkennen, dass durch das Nach-unten-Drücken des ersten Betätigungselements 8 dessen Ausnehmung 36 (vgl. Figur 4) in Höhe des Arretierelements 23 befördert worden ist. Angetrieben durch das Rückstellelement 10 bewegt sich daher das Arretierelement 23 automatisch in der in Figur 5 gezeigten Situation selbsttätig nach links und greift formschlüssig in die Ausnehmung 36 ein. Durch diese ArretierMechanik 22 kann das Ventil 3 in der in Figur 5 gezeigten Offen-Position 24 gehalten werden. Denn ein selbsttätiges Rückkehren in die oberste Position ist dem linken Betätigungselement 8 solange verwehrt, wie das Arretierelement 23 in der in Figur 5 illustrierten Arretierstellung 26 verharrt.

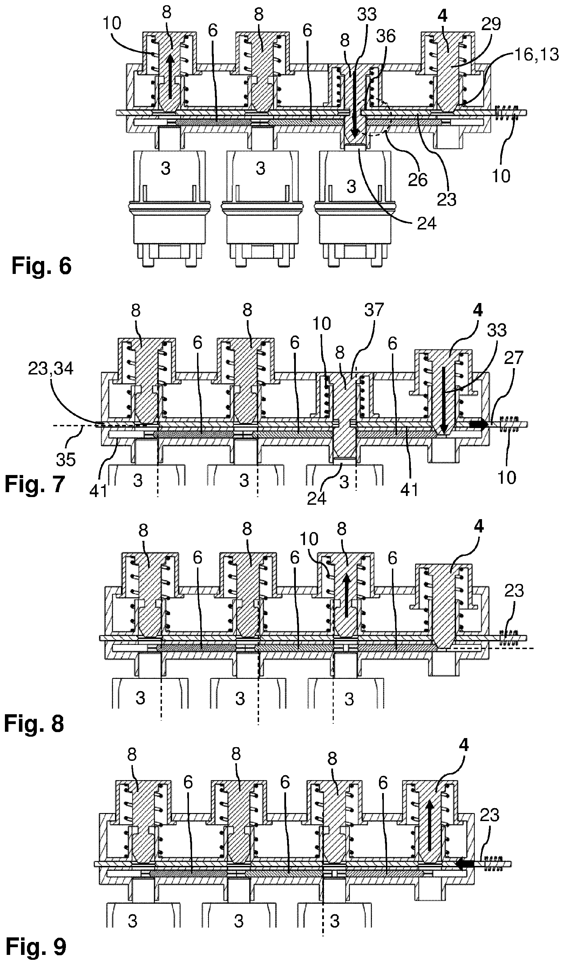

Um das Arretierelement 23 nun in die in Figur 4 illustrierte freigebende Stellung 27 zurückzuführen, in welcher das linke Betätigungselement 8 noch entlang der Betätigungsrichtung 11 verschieblich war, kann nun, wie in Figur 7 illustriert, das vierte Freigabe-Betätigungselement 4 betätigt werden: Auch dieses Betätigungselement 8 weist eine Schrägfläche 16 an seinem unteren Ende auf und kann daher bei Betätigung entlang der Betätigungsrichtung 11 das Arretierelement 23 nach rechts zurück in die in Figur 7 gezeigte Freigabestellung 27 verschieben.

Durch die Betätigung des ersten linken Ventils 3 mit Hilfe des zugeordneten Betätigungselements 8 können in der Situation der Figur 5 somit die Sperrelemente 6 in ihre jeweilige Sperrstellungen 5 verschoben werden. In diesem Fall (vgl. Figur 5) ist eine Betätigung der beiden anderen Ventile 3 blockiert/gesperrt, da auch bei Betätigen etwa des zweiten Betätigungselements 8 dieses nur bis zu dem ersten Sperrelement 6 vorgeschoben werden kann, wobei dann eine Verschiebung des ersten Sperrelements 6 nach links gerade verhindert ist, da diese Bewegung des Sperrelements 6 durch das erste arretierte Betätigungselement 8 blockiert ist (nämlich genau dann, wenn sich das Sperrelement 6 in der in Figur 5 gezeigten ON-Stellung 37 befindet, in welcher das Ventil 3 geöffnet ist).

In Figur 5 ist ferner zu erkennen, dass nicht nur die untere Schrägfläche 16 des vierten Betätigungselements 4 an einer korrespondierenden Schrägfläche 16 des Arretierelements 23 anliegt, sondern auch die untere Schrägfläche 16 des dritten Betätigungselements 8. Gleiches gilt für die untere Schrägfläche 16 des zweiten Betätigungselements 8. Daher kann auch durch Betätigen dieser nicht-aktuierten Betätigungselemente 8 in der Betätigungsrichtung 11 das Arretierelement 23 in die freigebende Stellung 27 überführt werden. In der Folge kann dann, wie in Figur 6 illustriert, das erste Betätigungselement 8 selbsttätig in die obere Position zurückkehren (mittels der Rückstellkraft des Rückstellelements 10), wodurch sich das erste Ventil 3 gerade (selbsttätig) wieder schließen kann.

Wird nun das dritte Betätigungselement 8 weiter in Richtung der Betätigungsrichtung 11 nach unten gedrückt, so entsteht die in Figur 6 illustrierte Situation, in welcher das Arretierelement 23 erneut angetrieben durch das zugeordnete Rückstellelement 10 in die Ausnehmung 36 des dritten Betätigungselements 8 eingreift und so das dritte Ventil 3 in der gezeigten Offen-Position 24 hält. Die Betätigungsvorrichtung 1 ist somit gerade so ausgebildet, dass durch Betätigen eines gerade geschlossenen Ventils (hier des dritten Ventils 3) ein anderes Ventil 3 (hier das erste Ventil 3), welches gerade in der Offen-Position 24 von der Arretiermechanik 22 gehalten ist (vgl. Figur 5), freigebbar ist. Hierbei kann jedes der vier Betätigungselemente 8 als ein Freigabe-Betätigungselement 4 betätigt werden, um so mittels einer jeweiligen Freigabebewegung 33 ein gerade in der Offen-Position 24 arretiertes Ventil 3 der Ventilanordnung 2 freizugeben.

In Figur 8 ist zu erkennen, dass durch Betätigen des vierten Betätigungselements 8 (d.h. des separaten Freigabe-Betätigungselements 4 - vgl. Figur 7) die Arretierung des dritten Betätigungselements 8 (vgl. Figur 6) gelöst werden konnte, sodass sich dieses arretierte Betätigungselement 8 nun in Figur 8, angetrieben durch das zugeordnete Rückstellelement 10, nach oben bewegt und somit ein selbsttätiges Schließen des dritten Ventils 3 ermöglicht. Wird nun - wie in Figur 9 illustriert - das vierte Betätigungselement 8/das separate Freigabe-Betätigungselement 4 losgelassen, so kehrt auch dieses in die obere Position zurück, wodurch wieder eine Ausgangssituation ähnlich der in Figur 3 illustrierten erreicht ist.

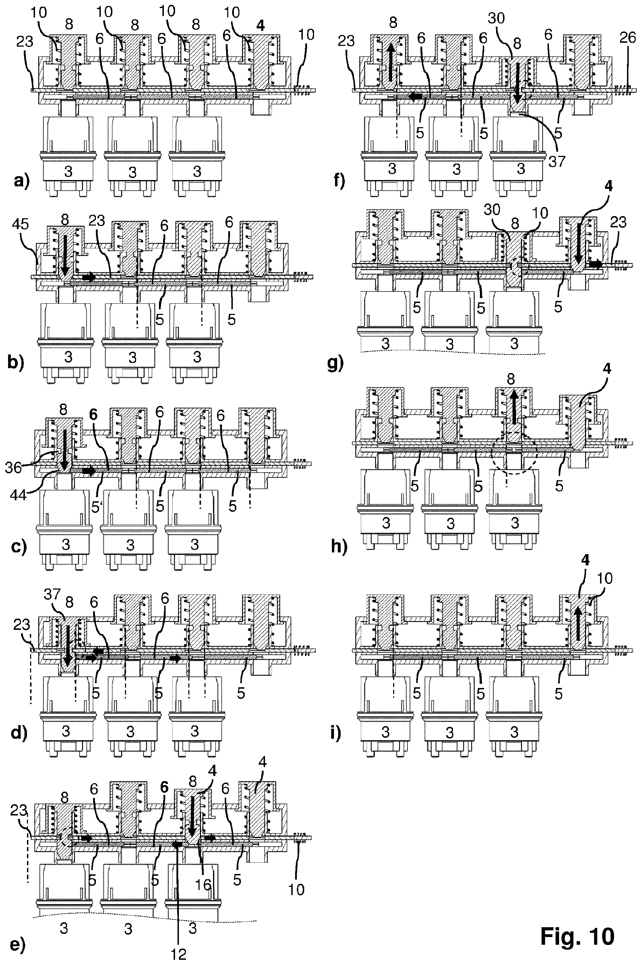

Die Figur 10 zeigt noch einmal eine vollständige Aktuierungs-Serie, wobei Figur 10a die Ausgangssituation zeigt und in Figur 10b zunächst das linke Betätigungselement 8 aktuiert wird. Nachdem dieses sowohl das Arretierelement 23 als auch das erste Sperrelement 6 nach rechts bewegt hat, öffnet das erste Betätigungselement 8 das linke Ventil 3 (vgl. Figur 10d). Hierbei sorgt erneut die Arretiermechanik 22 dafür, dass in Figur 10d das Arretierelement 23 das linke Betätigungselement 8 in der gezeigten ON-Stellung 37 arretiert. Diese Arretierung wird in Figur 10e durch Betätigen des dritten Betätigungselements 8 gelöst (das somit gerade als Freigabe-Betätigungselement 4 genutzt wird), da dieses das Arretierelement 23 zurück nach rechts in die freigebende Stellung 27 befördert. Hierbei wird die auf das Betätigungselement 8 ausgeübte Aktuierungskraft mit Hilfe des Umlenkelements 13 umgelenkt und dafür genutzt, die Druckfeder 10 zu komprimieren, die das Arretierelement 23 beaufschlagt.

Durch das Lösen der Arretierung des linken Betätigungselements 8 bewegt sich dieses erneut selbsttätig nach oben (Figur 10f) und nach weiterer Abwärtsbewegung des dritten Betätigungselements 8 kehrt das Arretierelement 23 in die Arretierstellung 26 zurück, um so, wie in Figur 10f gezeigt, nun das dritte Betätigungselement 8 in der Betätigungsposition 30 (Ventil 3 ist entsprechend in der ON-Stellung 37) zu fixieren. Die Fixierung des Betätigungselements 8 wird anschließend durch Betätigen des separaten Freigabe-Betätigungselements 4 gelöst, wie in Figur 10g gezeigt. Dadurch kann sich das Ventil 3 wieder selbsttätig schließen, wie in Figur 10h gezeigt. Schließlich kehrt auch das Freigabe-Betätigungselement 4 in seine Ausgangsposition zurück, angetrieben durch das zugeordnete Rückstellelement 10 - vgl. Figur 10i.

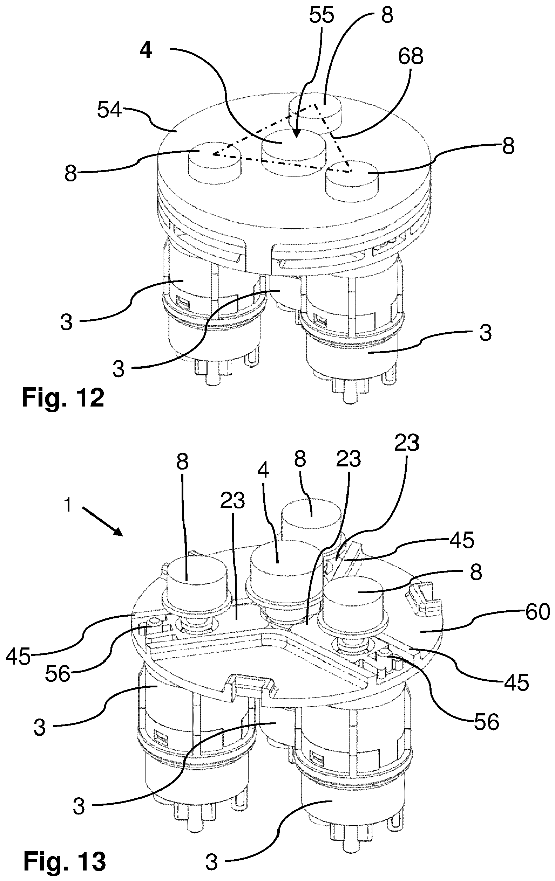

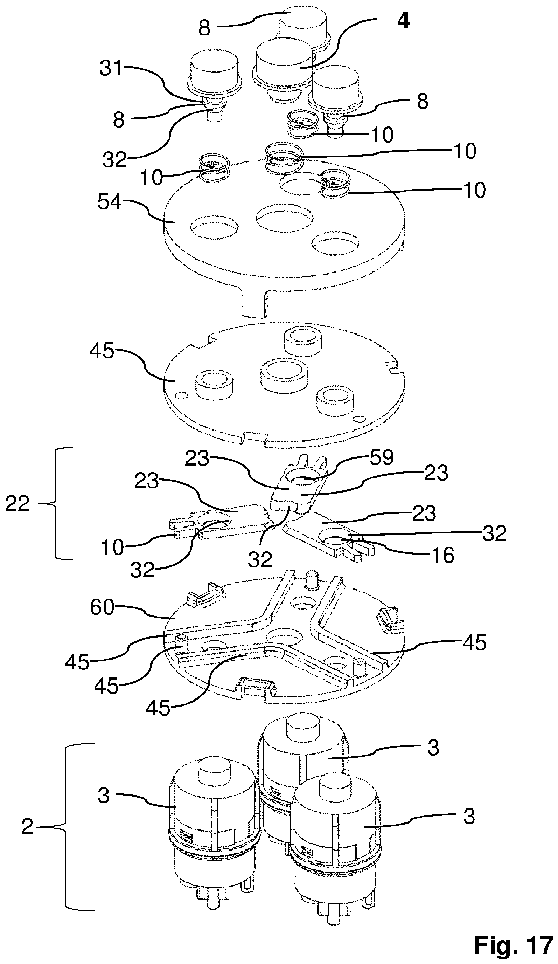

Die Figuren 12 bis 19 zeigen ein zweites erfindungsgemäßes Ausführungsbeispiel. Funktionell und/oder konstruktiv zu den vorangehenden Ausführungsbeispielen gleichartige oder identische Bauteile und Funktionseinheiten sind mit denselben Bezugszeichen bezeichnet und nicht noch einmal gesondert beschrieben. Die Ausführungen zu den Figuren 1 bis 10 gelten daher zu den Figuren 12 bis 19 entsprechend. Wie zu erkennen ist, weist dieses Beispiel drei Betätigungselemente 8 und ein zentral angeordnetes Freigabe-Betätigungselement 4 auf, wobei jedem der drei Betätigungselemente 8 je ein eigenes Arretierelement 23 zugeordnet ist (vgl. Figur 17).

Das zweite Ausführungsbeispiel gemäß den Figuren 12 bis 19 unterscheidet sich somit von dem vorangehenden Ausführungsbeispiel dadurch, dass mehrere separate Arretierelemente 23 ausgebildet sind, die radial verschieblich in Bezug auf ein Zentrum 55 der Vorrichtung 1 (vgl. Figur 12) gelagert sind. Wie man in Figur 13 und Figur 17 erkennt, sind die Arretierelemente 23 auf einer Grundplatte 60 mittels jeweiliger Führungsmittel 45 geführt. Dadurch können sich die Arretierelemente 23 jeweils nur in radialen Richtungen vor-und zurück bewegen.

Bei weiteren Ausführungsbeispielen können die Arretierelemente 23 entlang anderer Bahnen verfahrbar sein, insbesondere zum Beispiel auch verschwenkbar um eine Schwenkachse in einer Schwenkebene. Auch ein solches Verschwenken kann durch seitliches Verdrängen durch Aktuierung eines Freigabe-Betätigungselements 4 erreicht werden.

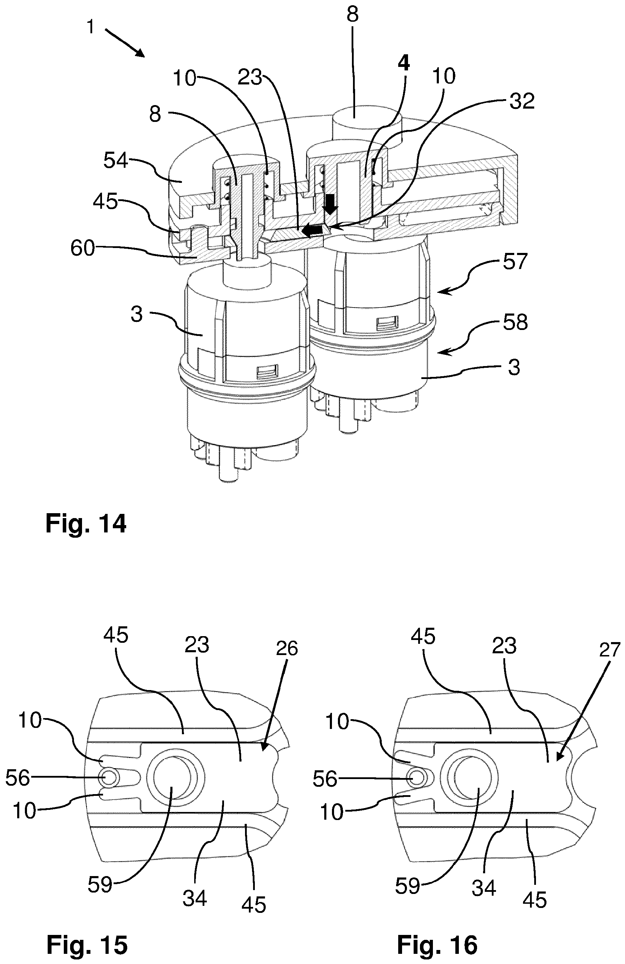

Durch Vergleich der Figur 15 mit Figur 16 wird deutlich, dass die Rückstellelemente 10, die jedem Arretierelement 23 zugeordnet sind, einstückig am jeweiligen Arretierelement 23 angeformt sind und für eine Rückstellung in die Arretierstellung 26 (Fig. 15) sorgen. Hierbei wirken die Rückstellelemente 10 mit passenden Vorsprüngen 56 zusammen, die ein jeweiliges Widerlager bilden. Um das jeweilige Arretierelement 23 in die in Figur 16 gezeigte Freigabestellung 27 zu verbringen wirkt das zentral angeordnete Freigabe-Betätigungselement 4 (vgl. Figur 14) direkt auf das jeweilige Arretierelement 23 über die in Figur 14 illustrierte Auflaufschräge 32 ein: Wird das Freigabe-Betätigungselement 4 nach unten gedrückt, so verdrängt dieses alle drei Arretierelemente 23 gleichzeitig nach radial außen, gegen die Rückstellkraft des jeweiligen Rückstellelement 10 (vgl. die Blockpfeile in Figur 14).

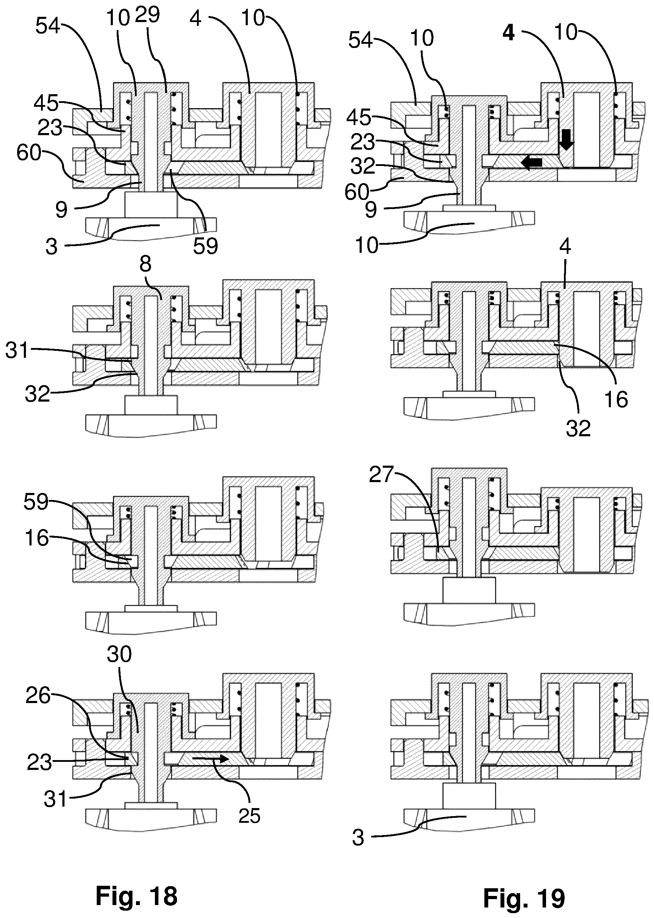

Figur 18 zeigt den Bewegungsablauf bei einer Betätigungsbewegung des Betätigungselements 8 von oben nach unten: Die Auflaufschräge 32 an dem Betätigungselement 8 verdrängt hier zunächst das Arretierelement 23 (zweites Bild von oben), bis das Arretierelement 23 den Haltevorsprung 31 des Betätigungselements 8 hintergreifen kann (drittes und viertes Bild von oben). Nun verbringt das Rückstellelement 10 (vgl. Figur 15) das Arretierelement 23 in dessen Arretierstellung 26 (viertes Bild von oben - vgl. dazu auch Figur 15), so dass das Betätigungselement 8 in seiner Betätigungsposition 30 fixiert ist (unterstes Bild).

Die übrigen Betätigungselemente 8 können nun auf gleiche Weise in ihre Betätigungsposition verbracht werden, denn eine gegenseitige Sperrung ist bei diesem zweiten Ausführungsbeispiel gerade nicht ausgebildet. Sollen alle betätigten Betätigungselemente 8 in ihre jeweilige Ausgangsposition 29 zurückgestellt werden, so muss das zentral angeordnete Freigabe-Betätigungselement 4 (vgl. Figur 12) betätigt werden.

Den Ablauf dieser Bewegung des Freigabe-Betätigungselement 4 zeigt Fig. 19 von oben nach unten: Es ist ersichtlich, dass das Freigabe-Betätigungselement 4 ebenfalls eine Auflaufschräge 32 aufweist, mit welcher alle Arretierelemente 23 in jeweils radialer Richtung nach außen verdrängbar sind (erstes Bild von oben in Figur 19 - vgl. dazu auch Figur 14 und 17), bis die zugehörigen Betätigungselemente 8 wieder frei (also nicht mehr arretiert) sind (zweites Bild von oben). Nun können die Betätigungselemente 8 wieder selbsttätig angetrieben durch das jeweilige Rückstellelement 10 in die Ausgangsposition 29 zurückkehren (drittes Bild von oben). Die Auflaufschräge 32 wirkt hierbei mit entsprechenden Schrägflächen 16 an den Arretierungselementen 23 zusammen. Ein eigenes Rückstellelement 10 bringt auch das Freigabe-Betätigungselement 4 wieder zurück in seine Ausgangsposition 29, sobald dieses losgelassen wird.

Soll verhindert werden, dass zwei Betätigungselemente 8 gleichzeitig gedrückt werden können, so können beispielsweise auch verschwenkbare Sperrelemente 6, insbesondere ausgebildet als verschwenkbare Segmente, eingesetzt werden, wie in Bezug auf das erste Ausführungsbeispiel bereits an den dortigen Sperrelementen 6 (vgl. Figur 1) erläutert wurde.

Die Ventile 3 aller Ausführungsbeispiele können in an sich bekannter Weise ein Pilotventil 57 und ein Hauptventil 58 aufweisen (vgl. Figur 14). Mit dem Pilotventil 57 ist hierbei eine Druckkammer aus einem an dem Ventil 3 anstehenden Betriebsdruck befüllbar und wieder entleerbar. Ein Innendruck in der Druckkammer bestimmt hierbei eine Schaltposition des Hauptventils 58. Somit kann eine Betätigungskraft des Ventils 3 wesentlich geringer sein als eine Kraft zum Ausführen der Schaltbewegung des Hauptventils 58, was den Vorteil der Verwendung eines Pilotventils 57 erklärt. Die Mechanik der Betätigungsvorrichtung 1 kann somit auf diese geringeren Kräfte ausgelegt werden, die zur Betätigung des Pilotventils 57 notwendig sind.

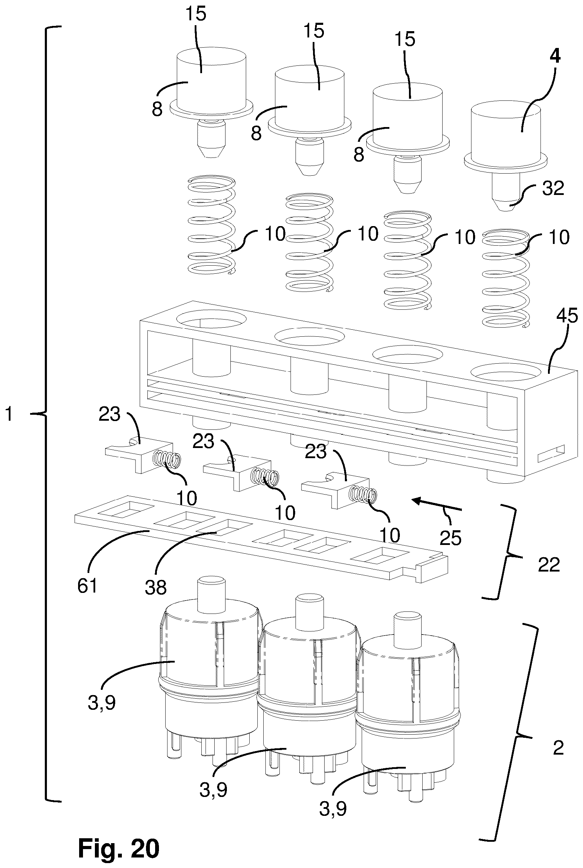

Die Figuren 20 bis 23 zeigen schließlich ein drittes Ausführungsbeispiel. Bei dieser erfindungsgemäßen Betätigungsvorrichtung 1 sind drei Betätigungselemente 8 zum Ansteuern eines jeweiligen Ventils 3 ausgebildet. Jedes der drei Betätigungselemente 8 verfügt dabei über ein separates Arretierelement 23 und jedes der Arretierelemente 23 verfügt über ein eigenes zugeordnetes Rückstellelement 10. Wie in Figur 20 angedeutet ist, sind die drei Arretierelemente 23 dabei entlang einer gemeinsamen Arretierrichtung 25 verschieblich gelagert. Wie bei den vorangegangenen Beispielen sind auch hier die Betätigungselemente 8 jeweils von einer Ausgangsposition 29 in eine Betätigungsposition 30 überführbar und jedes der wenigstens zwei Betätigungselemente 8 wird nach Überführung in die jeweilige Betätigungsposition 30 durch die Arretiermechanik 22 automatisch mit dem jeweils zugehörigen Arretierelement 23 in der Betätigungsposition 30 fixiert/arretiert.

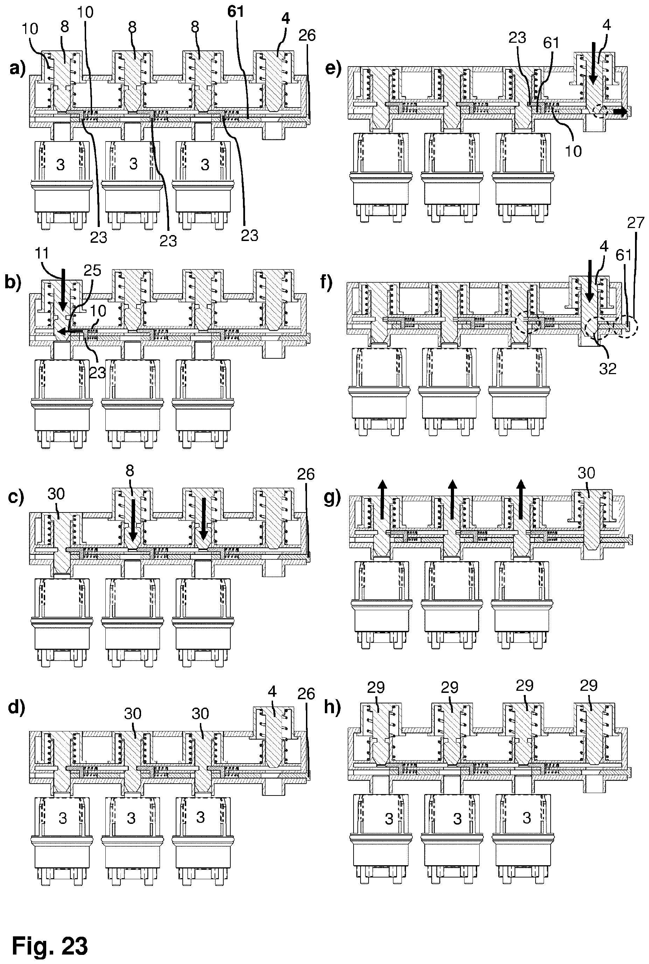

Anders als bei dem zweiten Ausführungsbeispiel werden die Arretierelemente 23 aber nicht direkt von dem separaten Freigabe-Betätigungselement 4 aktuiert, sondern vermittelt durch ein globales Freigabeelement 61, das seinerseits über eine Auflaufschräge 32 an dem Freigabe-Betätigungselement 4 durch Betätigen des Freigabe-Betätigungselement 4 aktuiert werden kann. Bei dem Beispiel der Figur 20 ist zudem keinerlei Sperr-Funktionalität ausgebildet sodass, wie in Figur 23d illustriert auch mehrere der Betätigungselemente 8 in der Betätigungsposition 30 arretiert werden können.

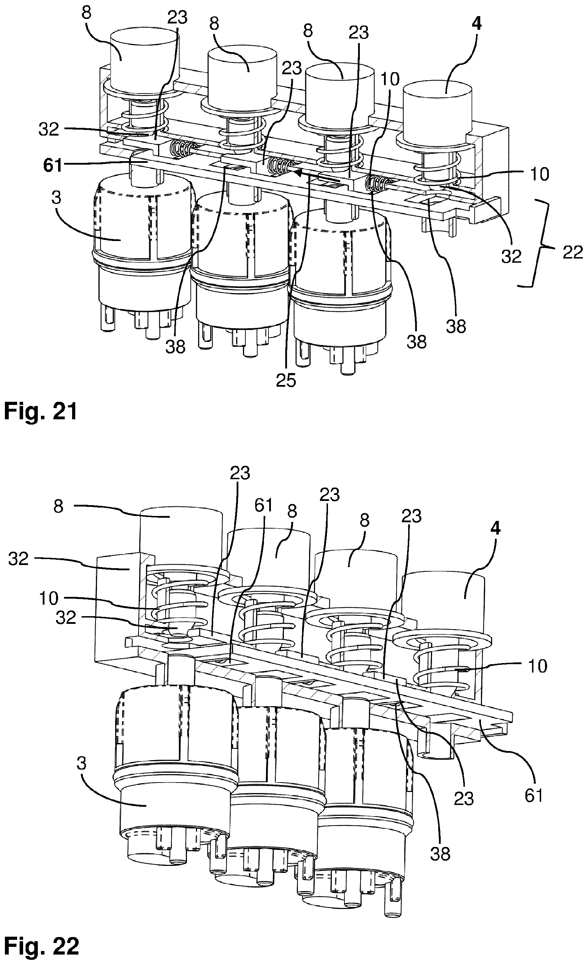

Das Freigabeelement 61 weist dabei jeweilige Durchgriffsfenster 38 auf, in die die Arretierelemente 23 eingreifen (vgl. die Figuren 22 und 23). Dadurch kann das Freigabeelement 61 die Arretierelemente 23 mitnehmen, wenn das Freigabeelement 61 mittels des Freigabe-Betätigungselements 4 verschoben wird (vgl. Figur 23 e)-g). Hierbei sind die Durchgriffsfenster 38 so groß ausgebildet, dass eine Relativbewegung zwischen dem Freigabeelement 61 und den Arretierelementen 23 in Richtung der Arretierbewegung 33 möglich ist.

Die Figur 23 erläutert in den Teilbildern a) bis c), wie ein betätigtes Betätigungselement 8 automatisch von der Arretiermechanik 22 in der Betätigungsposition 30 fixiert wird. Werden zusätzliche Betätigungselemente 8 aktuiert, gelangen diese ebenfalls in eine arretierte Betätigungsposition 30 (vgl. Figur 23 d). Durch Betätigen des Freigabe-Betätigungselements 4, kann das Freigabeelement 61 aus der Arretierstellung 26 (Figur 23 c), d)) in die Freigabestellung 27 (Figur 23 f)) überführt werden, wobei die Betätigungskraft über die Auflaufschräge 32 am Freigabe-Betätigungselement 4 auf das Freigabeelement 61 übertragen wird, um dieses quer zur Betätigungsrichtung 11 und entgegen der Arretierrichtung 25 (vgl. Figur 23 b) in die Freigabestellung 27 zu verschieben.

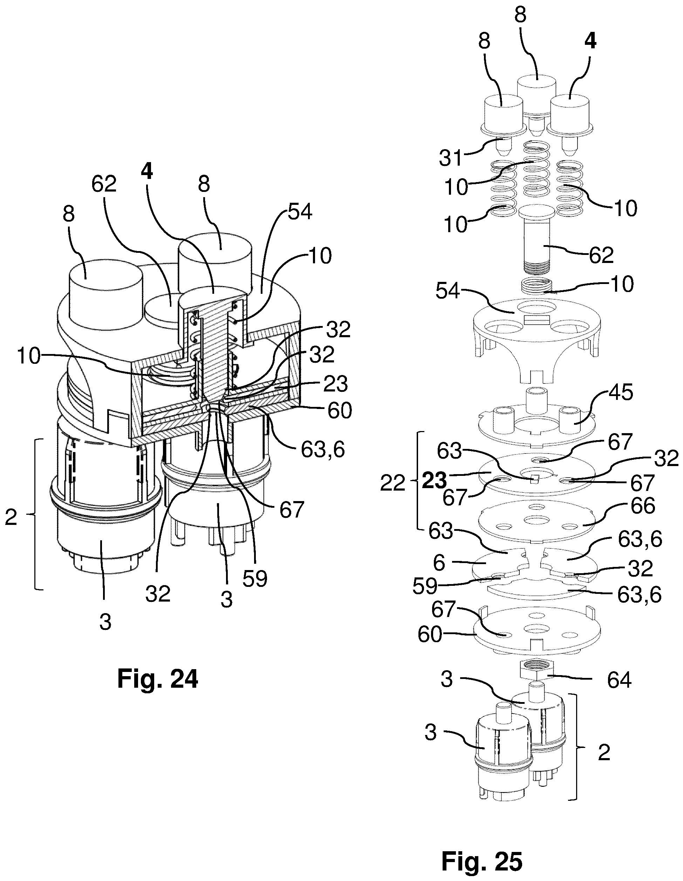

Die Figur 24 und 25 zeigen schließlich eine vierte Ausgestaltung einer erfindungsgemäßen Betätigungsvorrichtung 1, die ähnlich derjenigen der Figur 12 und Figur 17 ausgestaltet ist, jedoch nur mit zwei Ventilen 3 und auch nicht mit drei separaten Arretierelementen 23, sondern mit einem einzigen scheibenförmigen Arretierelement 23, welches als Schwenkteil drehbar um eine Achse gelagert ist, die der Längsachse des Befestigungsmittel 62 entspricht.

Die Betätigungsvorrichtung 1 der Figuren 24 und 25 hat eine Abdeckung 54, welche die beiden Betätigungselemente 8 und ein zusätzliches Freigabe-Betätigungselement 4 hält. Die Betätigungsbewegung der Elemente 8 und 4 wird dabei durch eine Führungsvorrichtung 45 vorgegeben.

Die Arretierungsmechanik 22 umfasst ein globales Arretierelement 23 sowie ein korrespondierendes Gegenelement 66. Das Arretierelement 23 und das Gegenelement 66 weisen jeweils Durchgangslöcher 67 auf, deren Größe auf die Betätigungselemente 8, die die Durchgangslöcher 67 durchgreifen, abgestimmt ist (vgl. Figur 24). Somit ist eine Lage des Arretierelements 23 festgelegt, wenn die Betätigungselemente 8 in die Löcher 67 eingreifen.

Das Arretierelement 23 lässt sich gegen das Gegenelement 66 verdrehen/verschwenken und zwar gegen die Rückstellkraft des Rückstellelements 10, das in Figur 24 unterhalb des Befestigungselement 62 zu sehen ist.

Unterhalb der Arretierungsmechanik 22 sind drei als Segmente 63 ausgebildete Sperrelemente 6 vorgesehen. Die Segmente 63 lassen sich ebenfalls in einer Schwenkbewegung bewegen (in etwa um die Längsachse von 62).

Zwischen benachbarten Segmenten 63 ist jeweils ein Loch 59 ausgebildet. Sind die benachbarten Segmente 63 eines Lochs 59 maximal voneinander entfernt, ist das Loch 59 größer als der Durchmesser des zugehörigen Betätigungselements 8,4. Das jeweilige Betätigungselement 8,4 kann dann in das Loch 59 eingeführt werden. Sind die benachbarten Segmente 63 eines Lochs 59 hingegen minimal voneinander entfernt, ist das Loch 59 kleiner als der Durchmesser des zugehörigen Betätigungselements 8,4. Das Betätigungselement 8,4 kann dann gerade nicht in das Loch 59 eingeführt werden, sodass die jeweilige Betätigungsbewegung gesperrt ist.

Wird eines der Betätigungselemente 8 in seine Betätigungsposition 30 gedrückt, so werden die angrenzenden Segmente 63 verdrängt aufgrund der an ihnen ausgebildeten Auflaufschrägen 32 (vgl. Figur 24). Hierdurch werden die übrigen Löcher 59 der Sperrelemente 6 gerade verkleinert, so dass das andere Betätigungselemente 8 nicht mehr hindurch passt. Es ist somit bei der Betätigungsvorrichtung 1 der Figuren 24 und 25 gerade nicht möglich, die beiden Betätigungselemente 8 gleichzeitig zu betätigen, aufgrund der Sperrwirkung, die durch die verschwenkbaren Segmente 63 erzeugt wird.

Die Betätigungsvorrichtung 1 der Figuren 24 und 25 weist schließlich eine Grundplatte 60 auf, die die Führungsvorrichtung 45, das scheibenförmige Arretierelement 23, das scheibenförmige Gegenelement 66 und die scheibenförmigen Segmente 63 in einer Stapelanordnung hält. Das Befestigungsmittel 62 und eine Kontermutter 64 halten dabei die Stapelanordnung zusammen. An der Grundplatte 60 sind die beiden Ventile 3 befestigt. Wird eines der beiden Betätigungselement 8 aus seiner Ausgangsposition 29 soweit nach unten gedrückt, dass es die Löcher 59 und 67 durchgreift, so wird das zugehörige Ventil 3 betätigt.

Wie erwähnt wurde, ist das globale Arretierelement 23 drehbar um das Befestigungsmittel 62 gelagert (vgl. Figur 25). Eine Spielbegrenzung 63, die mit einer zugehörigen Ausnehmung an der Führungsvorrichtung 45 (oder an einem anderen drehfesten Teil) zusammenwirkt, begrenzt dabei den verfügbaren Schwenkwinkel des Arretierelements 23. Das besagte Rückstellelement 10 definiert dabei eine Ruhelage des Arretierelements 23.

Die Betätigungselemente 8 und 4 haben jeweilige Auflaufschrägen 32 (vgl. Figur 24), mit Hilfe derer das Arretierelement 23 bei einer Betätigungsbewegung aus der Ruhelage geschwenkt wird. Diese Auflaufschrägen 28 wirken hierbei mit passenden Auflaufschrägen 32 an dem Arretierelement 23 zusammen (vgl. Figur 25). Wird eines der beiden Betätigungselemente 8 weiter betätigt, so hintergreift das Arretierelement 23 einen Haltevorsprung 31 am betätigten Betätigungselement 8, wodurch das Betätigungselement 8 arretiert wird und somit eine Rückbewegung unterbunden wird.

Das Freigabe-Betätigungselement 4 hat hingegen keinen solchen Haltevorsprung 31 und kann daher auch nicht arretiert werden.

Wird in einer solchen Situation das Freigabe-Betätigungselement 4 betätigt, so wird das Arretierelement 23 von der Arretierstellung 26 in seine Freigabestellung 27 ausgelenkt. Dies führt dazu, dass die Arretierung des zuvor noch arretierten Betätigungselements 8 aufgehoben wird, sodass dieses - angetrieben durch das zugehörige Rückstellelement 10 - in seine Ausgangsposition 29 zurück verbracht wird. Dadurch wird auch die Sperrwirkung der Segmente 63 aufgehoben, sodass das Freigabe-Betätigungselement 4 auch diese verschwenken kann. Daher kann anschließend das andere Betätigungselement 8 betätigt werden, um so das zweite der beiden Ventile 3 zu schalten.

Zusammenfassend wird zur Verbesserung der Bedienungseigenschaften einer Betätigungsvorrichtung 1 zum Freischalten von Wasserwegen 53 einer Sanitärinstallation 52 vorgeschlagen, dass die Betätigungsvorrichtung 1 eine Arretiermechanik 22 auf Basis wenigstens eines beweglichen Arretierelements 23 aufweist, mit der wenigstens zwei Betätigungselemente 8 der Vorrichtung 1, die dem Betätigen zugeordneter Ventile (3) dienen, in einer jeweiligen Betätigungsposition 30 lösbar arretierbar sind, und dass die Betätigungsvorrichtung 1 ein separates Freigabe-Betätigungselement 4 aufweist, mit dem eine Arretierung jedes der übrigen mindestens zwei Betätigungselemente 8 gelöst werden kann.

### Bezugszeichenliste

- 1: Betätigungsvorrichtung (zum Betätigen von 3)
- 2: Ventilanordnung
- 3: Ventil (von 2)
- 4: Freigabe-Betätigungselement
- 5: Sperrstellung
- 6: Sperrelement
- 8: Betätigungselement (zum Betätigen, insbesondere zum Öffnen von 3)
- 9: Tastventil
- 10: Rückstellelement
- 11: Betätigungsrichtung
- 12: Sperrbewegungsrichtung
- 13: Umlenkelement (zum Umsetzen von 11 in 12)
- 14: Sperrbewegung
- 15: Drücktaster
- 16: Schrägfläche/Gegenschräge
- 17: Betätigungsbewegung (von 8)
- 21: Stellelement (zum Öffnen von 3)
- 22: Arretierungsmechanik
- 23: Arretierelement
- 24: Offen-Position (von 3)
- 25: Arretierrichtung
- 26: Arretierstellung (von 23)
- 27: Freigabestellung (von 23)
- 29: Ausgangsposition (von 8)
- 30: Betätigungsposition (von 8)
- 31: Haltevorsprung
- 32: Auflaufschräge
- 33: Arretierbewegung (von 23)
- 34: Verschiebeteil
- 35: Arretierebene (in dieser bewegt sich 34)
- 36: Ausnehmung (in 8)
- 37: ON-Stellung (von 8)
- 38: Durchgriffsfenster (durch welches 8 hindurch aktuierbar ist, sofern nicht durch 6 blockiert)
- 40: Auflagefläche (von 6 zum Gleiten auf 41)
- 41: Verschiebefläche
- 44: Berührfläche
- 45: Führungsvorrichtung
- 52: Sanitärinstallation
- 53: Wasserwege
- 54: Abdeckung
- 55: Zentrum
- 56: Vorsprung
- 57: Pilotventil
- 58: Hauptventil
- 59: Loch
- 60: Grundplatte
- 61: Freigabeelement
- 62: Befestigungsmittel
- 63: Segment
- 64: Kontermutter
- 65: Spielbegrenzung
- 66: Gegenelement
- 67: Durchgangsloch (in 23)
- 68: Polygon

## Patentansprüche

1. **Betätigungsvorrichtung (1)** mit wenigsten zwei Betätigungselementen (8) zum Betätigen von wenigstens zwei Ventilen (3) einer Ventilanordnung (2),
wobei,
- jedem der wenigstens zwei Betätigungselemente (8) ein Arretierelement (23) zugeordnet ist, mit dem sich das jeweilige Betätigungselement (8) arretieren lässt,
- das Arretierelement (23) mittels eines separaten Freigabe-Betätigungselements (4) von einer Arretierstellung (26) in eine Freigabestellung (27) überführbar ist,
- jedes Betätigungselement (8) zwischen seinem freien Ende und seiner mit dem Arretierelement (23) zusammenwirkenden Ausnehmung (36) einen Haltevorsprung (31) aufweist, mit welchem das Arretierelement (23) auslenkbar ist und
- jedes Betätigungselement (8) im Bereich seines Haltevorsprungs (31) axial geführt ist.

2. Betätigungsvorrichtung (1) gemäß Anspruch 1, wobei die Ausnehmung (36) eine umlaufende Nut ist und/oder den Haltevorsprung (31) definiert.

3. Betätigungsvorrichtung (1) gemäß Anspruch 1 oder 2, wobei das Arretierelement (23) ein globales Arretierelement (23) ist, welches alle der wenigstens zwei Betätigungselemente (8) arretieren kann.

4. Betätigungsvorrichtung (1) gemäß Anspruch 1 oder 2, wobei jedem der wenigstens zwei Betätigungselemente (8) ein jeweiliges separates Arretierelement (23) zugeordnet ist,
- vorzugsweise wobei alle diese Arretierelemente (23) mittels des Freigabe-Betätigungselements (4) in eine jeweilige Freigabestellung (27) überführbar sind.

5. Betätigungsvorrichtung (1) gemäß Anspruch 4, wobei das Freigabe-Betätigungselement (4) direkt auf die Arretierelemente (23) einwirken kann, insbesondere vermittelt über eine Auflaufschräge (32), um die Arretierelemente (23) in eine jeweilige Freigabestellung (27) zu überführen.

6. Betätigungsvorrichtung (1) gemäß Anspruch 4 oder 5, wobei jedes der separaten Arretierelemente (23) mittels eines globalen Freigabeelements (61) in eine jeweilige Freigabestellung (27) überführbar ist,
- vorzugsweise wobei das Freigabeelement (61) mittels des Freigabe-Betätigungselements (4), insbesondere vermittelt über eine Auflaufschräge (32), aktuierbar ist.

7. Betätigungsvorrichtung (1) gemäß einem der Ansprüche 4 bis 6, wobei die separaten Arretierelemente (23) radial in Bezug auf das Freigabe-Betätigungselement (4) angeordnet sind und/oder in radialen Richtungen in jeweilige Freigabestellungen (27) verschiebbar sind oder
- wobei die separaten Arretierelemente (23) entlang einer gemeinsamen Arretierrichtung (25) verschieblich gelagert sind oder
- wobei die separaten Arretierelemente (23) in jeweilige Arretierstellungen (26) um jeweilige Rotationsachsen verschwenkbar sind.

8. Betätigungsvorrichtung (1) gemäß einem der vorhergehenden Ansprüche, wobei die Betätigungselemente (8) jeweils von einer Ausgangsposition (29) in eine Betätigungsposition (30) überführbar sind und jedes der wenigstens zwei Betätigungselemente (8) nach Überführung in die jeweilige Betätigungsposition (30) automatisch mit dem zugehörigen Arretierelement (23) in der Betätigungsposition (30) fixierbar oder fixiert ist, insbesondere um so eine selbsttätige Rückkehr des fixierten Betätigungselements (8) in die Ausgangsposition (29) zu verhindern und/oder
- wobei das jeweilige Arretierelement (23), vorzugsweise gegen eine Rückstellkraft eines Rückstellelements (10), von einer jeweiligen Arretierstellung (26) in eine jeweilige Freigabestellung (27) bewegbar ist, wobei das jeweilige Arretierelement (23) das zugehörige Betätigungselement (8) in der Arretierstellung (26) fixiert.

9. Betätigungsvorrichtung (1) gemäß einem der vorhergehenden Ansprüche, wobei jedem der wenigstens zwei Betätigungselemente (8) ein jeweiliges Sperrelement (6) zugeordnet ist mit dem sich eine Betätigungsbewegung (17) des jeweiligen Betätigungselements (8) zeitweise sperren lässt,
- insbesondere derart, dass sobald sich eines der wenigstens zwei Betätigungselemente (8) in einer/der Betätigungsposition (30) befindet, die Betätigung aller anderen der wenigstens zwei Betätigungselemente (8) gesperrt ist,
- vorzugsweise wobei durch Betätigen eines der wenigstens zwei Betätigungselemente (8) das jeweilige Sperrelement (6) von einer Sperrstellung (5) in eine Freigabestellung überführbar ist und/oder
- wobei durch Betätigen des separaten Freigabe-Betätigungselements (4) das jeweilige Sperrelement (6) von einer Freigabestellung in eine jeweilige Sperrstellung (5) überführbar ist.

10. Betätigungsvorrichtung (1) gemäß dem vorhergehenden Anspruch, wobei jedes der Sperrelemente (6) mit Hilfe des Freigabe-Betätigungselements (4) in eine jeweilige Sperrstellung (5) überführbar ist,
- insbesondere wobei sich die Sperrelemente (6) dabei gegenseitig berühren und somit aktuieren können, und/oder
- wobei durch Betätigen eines der wenigstens zwei Betätigungselemente (8) ein zugehöriges Sperrelement (6) von einer Sperrstellung (5) in eine Freigabestellung überführbar ist, wenn gerade keines der Betätigungselemente (8) mit Hilfe des zugehörigen Arretierelements (23) arretiert ist.

11. Betätigungsvorrichtung (1) gemäß einem der Ansprüche 1 bis 8, wobei sich die mindestens zwei Betätigungselemente (8) gegenseitig nicht sperren, sodass sich auch mehrere der mindestens zwei Betätigungselemente (8) gleichzeitig in einer/der Betätigungsposition (30) befinden können.

12. Betätigungsvorrichtung (1) gemäß einem der vorhergehenden Ansprüche, wobei das jeweilige Arretierelement (23) zum formschlüssigen Arretieren eines zugeordneten Betätigungselements (8) eingerichtet ist,
- insbesondere wobei hierzu ein Haltevorsprung (31) am jeweiligen Betätigungselement (8) ausgebildet ist, in welchen das Arretierelement (23) eingreifen kann.

13. Betätigungsvorrichtung (1) gemäß einem der vorhergehenden Ansprüche, wobei die wenigstens zwei Betätigungselemente (8) entlang einer gemeinsamen Betätigungsrichtung (11) manuell betätigbar sind und
- das Arretierelement (23), insbesondere die separaten Arretierelemente (23), sich beim Übergang in eine/die Arretierstellung (26) in einer Ebene bewegt/bewegen, die quer zur Betätigungsrichtung (11) verläuft, und/oder
- dass das Arretierelement (23), insbesondere die separaten Arretierelemente (23), in eine/die jeweilige Arretierstellung (26) linear bewegbar oder verschwenkbar sind.

14. Betätigungsvorrichtung (1) gemäß einem der vorhergehenden Ansprüche, wobei eine Arretierung eines der Betätigungselemente (8) durch das Arretierelement (23) durch Betätigung eines anderen nicht-arretierten der Betätigungselemente (8) aufhebbar ist,
- insbesondere wobei das aktuierte nicht-arretierte Betätigungselement (8) über eine Auflaufschräge (32) verfügt, mit welcher das Arretierelement (23) in eine/die Freigabestellung (27) überführbar ist.

15. **Sanitärinstallation (52),** insbesondere Dusch- und/oder Wannenarmatur, mit einer Betätigungsvorrichtung (1) nach einem der vorangehenden Ansprüche.

16. **Verwendung einer Betätigungsvorrichtung (1)** nach einem der Ansprüche 1 bis 15 an einer Sanitärinstallation (1), insbesondere an einer Dusch- und/oder Wannenarmatur.
